# EUROPEAN PATENT SPECIFICATION

(11) **EP 1 194 289 B1**
(45) Date of publication and mention of the grant of the patent: **01.08.2007**
(21) Application number: 99930713.5
(22) Date of filing: 25.06.1999
(51) Int. Cl.: B32B 17/10, C08J 3/22

(54) **COLORED POLYVINYL BUTYRAL INTERLAYER WITH IMPROVED HAZE PROPERTIES**
GEFÄRBTE POLYVINYLBUTYRALZWISCHENSCHICHT MIT VERBESSERTEN TRÜBUNGSEIGENSCHAFTEN
COUCHE DE LIAISON INTERCOUCHE EN POLYBUTYRAL DE VINYLE COLOREE DONT L'APPARENCE TROUBLE EST AMELIOREE

(43) Date of publication of application: 10.04.2002
(73) Proprietor: E. I. du Pont de Nemours and Company, Wilmington, Delaware 19898 (US)
(72) Inventor: PHILLIPS, Thomas, Richard, Vienna, WV 26105 (US)
(74) Representative: Morf, Jan Stefan
(86) International application number: PCT/US1999/014393
(87) International publication number: WO 2001/000404

(56) References cited:
- FR-A- 2 080 154
- GB-A- 1 245 268
- GB-A- 2 122 364
- US-A- 5 487 939
- US-A- 5 607 726

## Description

### BACKGROUND OF THE INVENTION

The present invention relates to an improved process for preparation of colored thermoplastic composite sheeting for use in laminated structures. More particularly, the invention relates to laminated structures useful in automotive and architectural application that are colored or produced with a colored gradient band (GBT) for aesthetic and sun-blocking properties.

Commercially available GBT material produced prior to the mid- to late-1970's used dyes for coloring. Because dyes are virtually completely soluble in a polyvinyl butyral (PVB) matrix, they produced very aesthetic looking products. However, even when used with light stabilizers, dyes are subject to fading due to ultraviolet radiation.

Weathering is particularly a problem in architectural applications where product life times of twenty years might be required. For this reason, many of the commercially available products have switched from dyes to organic and inorganic pigments for coloring. Various approaches for using the pigments have been tried; however, problems of agglomeration of the pigment containing medium, limited shelf life due to dissimilarity of viscosities of the medium and the polymer, dispersion of the solvent in the medium into the polymer with reduction of adhesion between the PVB sheet and glass as well as undesirable haze have been experienced.

It is therefore an object of this invention to provide colored and gradient band PVB interlayers that are free from the problems previously experienced.

Numerous patents disclose the use of pigments as uniform or band colorants for PVB. USP 4,316,868 (issued to Monsanto, nee Solutia) states (col. 5, line 10) "The polymer extruded through the probe can be dyed or pigmented to produce the desired color. The pigment should be adequately dispersed at all times to give best results."

Japanese Patent Application 2-272068 (Mitsubishi Monsanto) claims the use of a plasticizer-based ink wherein the pigment concentration is 20 percent maximum (with the use of dispersants), the average particle size is less than 2.5 micrometers and the pH is controlled to between 4 and 10.

US-A-5,487,939 describes a transfer printing process for preparing a colored interlayer sheeting wherein a composite coating consisting of a layer containing pigment particles in a resin binder and at least one non-pigmented layer is transferred from a carrier film to the sheeting. US-A-5,607,726, as well, describes a transfer printing process for preparing composite coatings useful in preparing laminated structures with a coloration gradient.

Japanese Patent Application JP 9-183638 (Sumika Color KK) claims an apparent chip material made from a rosin-modified maleic acid resin. In this application the chip type material must be first dissolved in plasticizer then undergo additional bead milling before combining with PVB to make sheeting.

Japanese Patent Application 2-272068 purports to overcome manufacturing and product problems associated with using ink injection into an extruder in making uniformly colored PVB. Pigment aggregation, an aesthetic, visual problem is overcome by controlling the pigment particle size and pH and using a dispersant in the ink composition.

Japanese Patent Application 9-183638 also provides a plasticizer-based dispersion but by pre-processing the colorant in a rosin-modified maleic acid binder resin. This chip type system is partially soluble in plasticizer, must undergo additional bead milling and is only blended with the PVB before pressing sheeting material. However, because of its acid functionality, it would be expected that under extrusion processing conditions, such a binder resin would readily cross-link with the PVB resin and result in processing difficulties, i.e., uncontrollable viscosity changes.

Further, in coating type applications as describe later, such a binder resin would have little affinity for glass and, therefore, would be non-functional in providing a laminated safety product.

### SUMMARY OF THE INVENTION

A process for preparing a laminar structure comprised of at least two layers of glass and a.sheet of plasticized PVB is disclosed by providing a color concentrate comprised of solid pigmented chips wherein the chips have a preselected pigment particle size range to minimize haze in the laminated structure and are dispersed in a low molecular weight polyvinyl butyral resin, wherein the low-molecular weight polyvinyl butyral has a Brookfield solution viscosity from 20-90 x 10⁻³ Pa.s (20-90 centipoises) when measured at 20°C as a 5% solution in n-butanol said chips comprising from 10 to 60 weight percent of the color concentrate, depositing said color concentrate on a roughened

Also, a process for preparing colored thermoplastic composite sheeting as defined in present claim 1 is disclosed. surface of polyvinyl butyral sheeting as a dried colored coating or directly melt incorporating, and thereafter laminating said sheeting between the surfaces of layers of glass.

By "preselected pigment particle size it is meant a mean pigment particle size from 50 to 500 nanometers.

Because of the particulate nature of pigments, it is critical that the particle size of the pigments be as small as possible to maintain the high transparency and low haze that is the norm for dye-based colored products. In accordance with this invention it has been found that direct use of chip concentrates - typically roll-milled pigment/binder solid concentrates, where the binder is a low molecular weight PVB resin, give colored laminates having excellent haze characteristics.

It has now been found that when used to color PVB either as a solid colorant or as a letdown ink, chips provide a higher quality product in terms of transparency and haze, as well as a less complex route for adding the concentrate.

The chips, based on commercially available low molecular weight PVB's, do not result in gelation or cross-linking of the PVB, a problem often encountered with high molecular weight or functionalized binder resins. Further, the low molecular weight binders do not interfere in any way with the performance of the final laminated product.

Further, the resulting ground chip product can be used directly in extrusion operations or can be made into inks with suitable solvents for printing applications.

### DETAILED DESCRIPTION OF THE INVENTION

Plasticized polyvinyl butyral (PVB) resin is the preferred polymer for making laminated safety glass constructions used in the automotive and architectural industries. Plasticized PVB sheeting is prepared by well known processes. Preparation of plasticized PVB is disclosed in Phillips, U.S. 4,276,351.

It is common practice in both applications to uniformly color the PVB or to add a colored gradient band on the plasticized PVB sheeting by processes well known in the art.

It has been found that the use of pigmented chip color concentrates based on low-molecular weight PVB resins provides a method of achieving lower haze in both uniformly colored PVB and gradient band PVB than is currently commercial available with pigmented products produced by other methods.

Further, these chips may be used directly in all known PVB processes without additional processing.

Chips are typically prepared in a heated two-roll mill process where the combined pigment, a compatible binder resin for the end-use application and, sometimes, dispersing agent(s) are subjected to high shear near the melting point of the binder resin. The resulting slabs are broken up into workable size particles called chips.

The particle size of the pigments prepared according to the above process from commercially available pigments is nominally an order of magnitude smaller than those described in the referenced Japanese Patent Application 2-272068 and equal to or slightly larger than those disclosed in Japanese Patent Application 9-183638.

The chips can be used directly in extrusion operations to make either uniformly colored PVB or co-extruded gradient band PVB. Because of the smaller pigment particle size, chips do not form aggregations when used directly in extrusion processes. Further, because chips are solids and can be added directly with the polymer feed to the extruder, it is not necessary to develop injection capabilities as those described in US Patent 3,679,788 or dissolve them in plasticizer as described in Japanese Patent Application 9-183638.

Further, solids are far easier to handle than liquids, thereby eliminating spill and contamination concerns and the like.

However, while not soluble in plasticizer, if desirable, the chips according to the present invention could be ground to a very small size, be dispersed in plasticizer and fed to extrusion processes previously described.

Chips can also be letdown to make printing inks using appropriate solvents or can be mixed with end-use resin to either be used directly as feed or extrude to produce letdown pellets for subsequent direct use.

The following examples in which parts and percentages are by weight unless otherwise indicated further illustrate the invention.

### EXAMPLE 1 (not in accordance with the Claimed invention)

Black, blue and red pigmented color chips were commercial prepared by Penn Color Inc. according to specifications which follow. The chip contained nominally 40 percent of a commercially available pigment and 60 percent Mowital® B30T, a commercially available PVB resin. Mowital® B30 series resins have a solution viscosity of 20-90 mPa.s (20-30 centipoise) and Mowital ® B60 series resins a solution viscosity 60-90 mPa.s (60-90 centipoise). (The solution viscosity that is a measure of molecular weight was determined using Brookfield solution viscosity data for the resins measured at 20 degrees C as a 5% solution in n-butanol.) Both performed acceptably in the preparation of the chip formulations. PVB resin typically used to produce sheeting having a solution viscosity of 130-140 did not perform acceptably. Particle size analysis indicated the mean size of the pigments to be between 100-300 nanometers.

A dark blue ink batch was prepared by letting the chips down along with additional PVB resin for viscosity control and 3:1 methanol:toluene solvent.

The ink was coated and transferred to PVB sheeting according to procedures described in US Patents 5,487,939 and 5,607,726.

The gradient band sample was laminated between glass sheets according to normal lamination techniques. The sample was transparent, did not exhibit pigment agglomeration or diffuse light when back-lighted by a high intensity light.

### COMPARATIVE EXAMPLE A

A composite blue ink was prepared according to conventional media-mill techniques using a Dyno mill with zirconia media. Black, blue and red pigments were combined with PVB resin for viscosity control and 3:1 methanol:toluene solvent and milled for nominally 48 hours at which time it was filtered through nominally 3 micron filters.

The ink was coated, transferred to PVB sheeting and laminated as in Example 1. The sample was transparent, did not exhibit pigment agglomeration but did diffuse light when back-lighted by a high intensity light.

The laminates prepared in Example 1, Comparative Example A and a commercially available laminate containing pigmented gradient band Saflex®, (Solutia's nee Monsanto's trademark for its PVB sheeting) PVB were measured for haze using a Hunter Laboratories UltraScan® II Sphere Spectrocolorimeter.

The results in Table 1 show that the laminate prepared according to Example 1 has lower haze than either the comparative example or the commercially available product. The lower haze is attributed to smaller pigment particle size and narrower distribution verses the media-mill colorant and to lack of pigment agglomeration verses the commercially available co-extruded product.

**Table 1**

| Sample | Colorant Process | Diffuse % Transmission | Total % Transmission | Haze |
|---|---|---|---|---|
| | | | | |
| Example I | Chip | 0.11 | 39.78 | 0.29 |
| Comparative Example A | Media-Mill | 1.94 | 42.7 | 4.55 |
| Saflex® | Unknown | 0.23 | 40.41 | 0.58 |

### EXAMPLE 2

The chips used for Example 1 were dry fed to an extrusion process making uniformly colored gray PVB sheeting. The sheeting was laminated as described in Example 1. The laminate of Example 2 and a laminate of commercially available uniformly colored gray pigmented Saflex® PVB were measured for haze as previous described.

The results in Table 2 show that Example 2 has lower haze than the commercially available product.

**Table 2**

| Sample | Colorant Process | Diffuse % Transmission | Total % Transmission | Haze |
|---|---|---|---|---|
| Example 2 | Chip | 0.07 | 44.05 | 0.16 |
| Saflex® | Unknown | 0.26 | 42.68 | 0.62 |

## Claims

1. A process for preparing colored thermoplastic composite sheeting for use in laminated structures comprising providing solid color concentrate chips comprised of a pigment having a preselected pigment particle size from 50 to 500 nm to minimize haze in the laminated structure and being dispersed in a low-molecular weight polyvinyl butyral resin, wherein the low-molecular weight polyvinyl butyral has a Brookfield solution viscosity from 20-90 x 10⁻³ Pa·s (20-90 centipoises) when measured at 20°C as a 5% solution in n-butanol, said chips comprising from 10 to 60 weight percent of the pigment, and either (a) directly extruding the color concentrate chips with end-use polyvinyl butyral resin or (b) coextruding the color concentrate chips with end-use polyvinyl butyral resin.

2. A process for preparing a laminate structure comprising the process of claim 1 for preparing colored thermoplastic composite sheeting, and thereafter laminating said sheeting of claim 1 between the surfaces of two layers of glass.

## Patentansprüche

1. Verfahren zur Herstellung von farbiger thermoplastischer Verbundfolie zur Verwendung in laminierten Strukturen, das Folgendes umfasst: Bereitstellen eines Farbkonzentrats aus festen Chips, die aus einem Pigment mit einer vorausgewählten Pigmentpartikelgröße von 50 bis 500 nm bestehen, um die Trübung in der laminierten Struktur auf ein Mindestmaß zu verringern, und in einem niedermolekularen Polyvinylbutyralharz dispergiert sind, worin das niedermolekulare Polyvinylbutyral eine Brookfield-Lösungsviskosität von 20 - 90 x 10⁻³ Pa·s (20 - 90 Centipoise) aufweist, wenn es bei 20 °C als eine 5%ige Lösung in n-Butanol gemessen wird, wobei die Chips von 10 bis 60 Gew.-% des Pigments umfassen, und entweder (a) direktes Extrudieren der Farbkonzentrat-Chips mit Polyvinylbutyralharz für den Endgebrauch oder (b) Coextrudieren der Farbkonzentrat-Chips mit Polyvinylbutyralharz für den Endgebrauch.

2. Verfahren zur Herstellung einer Laminatstruktur, umfassend das Verfahren nach Anspruch 1 zur Herstellung von farbiger thermoplastischer Verbundfolie und danach Laminieren der Folie nach Anspruch 1 zwischen die Oberflächen von zwei Glasschichten.

## Revendications

1. Procédé pour préparer une feuille composite thermoplastique colorée pour un usage dans des structures stratifiées, comprenant la mise en oeuvre de copeaux de concentré de couleur solides, constitués d'un pigment présentant une taille particulaire de pigment présélectionnée de 50 à 500 nm pour minimiser le voile dans la structure stratifiée, et que l'on disperse dans une résine de polyvinylbutyral de faible poids moléculaire, la résine de polyvinylbutyral de faible poids moléculaire ayant une viscosité en solution de Brookfield de 20 à 90 x 10⁻³ Pa·s (20 à 90 centipoises) mesurée à 20°C sous la forme d'une solution à 5% dans du n-butanol, lesdits copeaux comprenant 10 à 60 pour cent en poids du pigment, et comprenant soit (a) l'extrusion directe des copeaux de concentré de couleur avec la résine de polyvinylbutyral d'utilisation finale soit (b) la co-extrusion des copeaux de concentré de couleur avec la résine de polyvinylbutyral d'utilisation finale.

2. Procédé pour préparer une structure stratifiée, comprenant le procédé selon la revendication 1 pour préparer une feuille composite thermoplastique colorée, puis l'application de ladite feuille selon la revendication 1 entre les surfaces de deux feuilles de verre.
